# EUROPEAN PATENT APPLICATION

(11) **EP 4 654 055 A1**
(43) Date of publication of application: **26.11.2025**
(21) Application number: 24176847.2
(22) Date of filing: 20.05.2024
(51) Int. Cl.: G06F 21/53, H04W 84/00, H04L 9/40, H04W 88/16

(54) **SECURING AGAINST MALICIOUS ADJUNCTS**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

The present disclosure relates to securing computers against threats found in adjuncts to communications, such as links in and attachments to emails. It provides an internet gateway for connecting a computer network to the internet, the internet gateway comprising: a traffic monitor configured to monitor outgoing communications from the computer network; a scanner configured to scan incoming communications to the computer network in response to detection, by the traffic monitor, of communication to a suspicious destination; and a sandbox manager configured to, in response to identification, by the scanner, of a suspicious adjunct to an incoming communication, launch a sandbox container on the internet gateway and open the suspicious adjunct in that sandbox container.

## Description

### FIELD

The present disclosure relates to securing computers against threats found in adjuncts to communications, such as links in and attachments to emails.

More specifically, aspects relate to: an internet gateway, a system comprising a plurality of internet gateways and a security function, a computer-implemented security method, a computer program comprising instructions which, when the program is executed by an internet gateway, cause the internet gateway to carry out such a method, a computer-readable data carrier having stored thereon such a computer program, and a data carrier signal carrying such a computer program.

### BACKGROUND

Cyber threat actors often gain access to their target computer devices via communications such as emails and messages sent via messaging applications. Such malicious 'phishing' communications typically comprise an adjunct such as an attached file or a link (e.g. a uniform resource locator, URL) which, when opened on a user device, result in a cyber-attack on that device, and sometimes other devices in communication with it. For example, an attachment can be a malware file and a link can be to a location from which a malware file automatically downloads. Alternatively or additionally, a link can be to a location which is designed to capture valuable information such as via a web form requesting one or more of: secret credentials, personal information, and payment details.

One strategy for preventing such attacks is to open all adjuncts to communications in an isolated virtual environment known as a sandbox. For example, Microsoft Office 365^{™} opens files downloaded to a personal computer (PC) from the internet or potentially unsafe locations in Application Guard, an isolated HYPER-V^{™}-enabled container, which is separated from its host operating system through hardware-based virtualisation. However, this approach requires significant resources such as memory, processing power, electrical power, and time - sometimes introducing a delay which can impact user experience, and requires installation of software on each PC to be protected. Centralised sandboxing approaches are also known, wherein suspicious adjuncts are analysed in a cloud environment. While this does not necessarily require installation of software on individual user devices, it still suffers from the same resource consumption issues as Application Guard. In addition, it requires trust in the cloud service provider since they will necessarily require access to the contents of communications and their adjuncts. Providing this access introduces an additional security risk.

What is needed is an improved approach to securing computers against threats introduced by opening adjuncts to communications.

### SUMMARY

According to a first aspect, there is provided an internet gateway for connecting a computer network to the internet, the internet gateway comprising:
a traffic monitor configured to monitor outgoing communications from the computer network;
a scanner configured to scan incoming communications to the computer network in response to detection, by the traffic monitor, of communication to a suspicious destination; and
a sandbox manager configured to, in response to identification, by the scanner, of a suspicious adjunct to an incoming communication, launch a sandbox container on the internet gateway and open the suspicious adjunct in that sandbox container.

The scanner can be comprised in a messaging proxy container such as an email proxy container.

The sandbox manager can comprise an activator configured to launch the sandbox container, for example by calling a container engine to launch the sandbox container. Such a container engine can be comprised in the internet gateway, for example as part of its operating system.

The sandbox manager can comprise an activator configured to open the suspicious adjunct in the sandbox container.

The same activator can be configured to launch the sandbox container and open the suspicious adjunct in it.

The computer network can be a local area network (LAN). The LAN can comprise wired and/or wireless connections.

The suspicious destination can be a uniform resource locator (URL), domain, or internet protocol (IP) address.

The traffic monitor can be configured to determine that the suspicious destination is suspicious by determining that it is present on a threat list, or absent from a safe list. Such a threat list/safe list can be stored on the internet gateway, e.g. comprised in the traffic monitor, or at a remote location in communication with it, such as on a server e.g. of an internet service provider or a resource reputation service.

An anomaly engine of the traffic monitor can be configured to determine that the suspicious destination is suspicious by determining that it is anomalous in the context of traffic behaviour previously observed by the traffic monitor for one or more of: the computer network, a network device of the computer network, and a user of the computer network.

The incoming communications can comprise emails and/or messages communicated via one or more messaging applications or services.

The suspicious adjunct can be an attached file, or a link.

The sandbox container can be configured to log a run trace of the suspicious adjunct and the internet gateway can further comprise a remediator configured to use said run trace to update one or more of:
the traffic monitor,
the scanner,
one or more network devices comprised in the computer network, and
a security function of an internet service provider, a cybersecurity service, or a resource reputation service.

The update can comprise updating one or more of:
a threat list;
a safe list; and
a data store (such as a database) comprising one or more of:
   malware samples,
   malware characteristics,
   malware signatures, and
   malware run traces.

The remediator can be configured to use the run trace to update a security function of an internet service provider, a cybersecurity service, or a resource reputation service;
the internet gateway being further configured to update one or both of the traffic monitor and the scanner based on an update provided to it by the security function.

The update provided by the security function can be based on one or more of: the update provided by the remediator of the internet gateway, an update provided by another internet gateway, and another data source.

According to a second aspect, there is provided a system comprising a plurality of internet gateways according to the first aspect, and the security function referred to therein.

The sandbox container can be configured to mimic an operating system environment of a device of the computer network the incoming communication is directed to.

The sandbox container can be configured to specifically mimic operating systems of each individual device of the computer network, or to generically mimic the operating systems of one or more groups of devices of the computer network.

The internet sandbox manager can be configured to destroy the sandbox container in response to determining that a sequence of events initiated by opening the suspicious adjunct is complete, or, if sooner, on determining that a predetermined sandbox timeout period has expired.

The sandbox manager can comprise a container lifecycle manager configured to destroy the sandbox container.

The sandbox manager can comprise a container lifecycle manager configured to determine that the sequence of events initiated by opening the suspicious adjunct is complete.

The sandbox manager can comprise a container lifecycle manager configured to determine that the predetermined sandbox timeout period has expired.

The same container lifecycle manager can be configured to perform one or more of: destroying the sandbox container, determining that the sequence of events initiated by opening the suspicious adjunct is complete, and determining that the predetermined sandbox timeout period has expired.

The sandbox manager can be configured to determine that the sequence of events initiated by opening the suspicious adjunct is complete by monitoring system calls (e.g. one or more of: file, network, memory, and processor related system calls) that the suspicious adjunct makes inside the sandbox container. The sequence of events can for example be determined to be complete when a frequency of such systems calls falls below a predetermined threshold frequency, for example between 10 and 100 system calls per second, e.g. 50 system calls per second.

The predetermined sandbox timeout period can be between 1 minute and 1 hour, such as between 10 minutes and 30 minutes, such as 20 minutes.

The scanner can be configured to scan incoming communications to the computer network directed to a plurality of communication clients.

The plurality of communication clients can comprise one or more email and/or other messaging clients.

The scanner can be configured to identify the suspicious adjunct to the incoming communication by determining that the incoming communication originates from the suspicious destination.

The scanner can be configured to identify the suspicious adjunct by determining that the incoming communication originates from a destination which is present on a threat list, or absent from a safe list.

The scanner can be configured to scan the incoming communications for a predetermined scan duration from detection of the communication to the suspicious destination.

The predetermined scan duration can be between 1 minute and 1 hour, such as between 2 minutes and 10 minutes, such as 5 minutes. The internet gateway can be further configured to determine the predetermined scan duration in dependence on one or more properties of the detected communication to the suspicious destination. Said one or more properties can comprise: an identity of the suspicious destination and/or any other destinations the communication is directed to, a type of the detected communication to the suspicious destination, and contents of the communication to the suspicious destination (including metadata and any adjuncts).

According to a third aspect, there is provided a computer-implemented security method performed by an internet gateway connecting a computer network to the internet, the method comprising:
a traffic monitor monitoring outgoing communications from the computer network;
the traffic monitor thereby detecting communication to a suspicious destination;
responsive thereto, a scanner scanning incoming communications to the computer network;
the scanner thereby identifying a suspicious adjunct to an incoming communication;
responsive thereto, a sandbox manager launching a sandbox container on the internet gateway; and
the sandbox manager opening the suspicious adjunct in that sandbox container.

The scanner can be comprised in a messaging proxy container such as an email proxy container.

The computer network can be a wired or wireless local area network.

The suspicious destination can be a uniform resource locator (URL), domain, or internet protocol (IP) address.

Detecting communication with the suspicious destination can comprise determining that the suspicious destination is present on a threat list, or absent from a safe list. Such a threat list/safe list can be stored on the internet gateway or at a remote location in communication with it, such as on a server e.g. of an internet service provider, a cybersecurity service, or a resource reputation service. Detecting communication with the suspicious destination can comprise determining that the suspicious destination is anomalous in the context of observed traffic behaviour for one or more of: the computer network, a network device of the computer network, and a user of the computer network.

The incoming communications can comprise emails and/or messages communicated via one or more messaging applications or services.

The suspicious adjunct can be an attached file, or a link.

The computer-implemented method can further comprise the sandbox container logging a run trace of the suspicious adjunct and a remediator of the internet gateway using said run trace to update one or more of:
the traffic monitor,
the scanner,
one or more network devices comprised in the computer network, and
a security function of an internet service provider, a cybersecurity service, or a resource reputation service.

The update can comprise updating:
a threat list, or a safe list, and/or
a data store (such as a database) comprising: malware samples, malware characteristics, and/or malware signatures, and/or malware run traces.

The remediator can use the run trace to update a security function of an internet service provider, a cybersecurity service, or a resource reputation service. The method can further comprise updating one or both of the traffic monitor and the scanner based on an update provided by the security function.

The update provided by the security function can be based on one or more of: the update provided by the remediator of the internet gateway, an update provided by another internet gateway, and another data source.

The sandbox container can mimic an operating system environment of a device of the computer network the incoming communication is directed to.

The sandbox container can specifically mimic operating systems of each individual device of the computer network, or generically mimic the operating systems of one or more groups of devices of the computer network.

The sandbox manager can destroy the sandbox container in response to determining that a sequence of events initiated by opening the suspicious adjunct is complete, or, if sooner, on determining that a predetermined sandbox timeout period has expired.

The sandbox manager can comprise a container lifecycle manager configured to destroy the sandbox container.

The sandbox manager can comprise a container lifecycle manager configured to determine that the sequence of events initiated by opening the suspicious adjunct is complete.

The sandbox manager can comprise a container lifecycle manager configured to determine that the predetermined sandbox timeout period has expired.

The same container lifecycle manager can be configured to perform one or more of: destroying the sandbox container, determining that the sequence of events initiated by opening the suspicious adjunct is complete, and determining that the predetermined sandbox timeout period has expired.

Determining that the sequence of events initiated by opening the suspicious adjunct is complete can comprise monitoring system calls (e.g. one or more of: file, network, memory, and processor related system calls) that the suspicious adjunct makes inside the sandbox container. The sequence of events can for example be determined to be complete when a frequency of such systems calls falls below a predetermined threshold frequency, for example between 10 and 100 system calls per second, e.g.50 system calls per second.

The predetermined sandbox timeout period can be between 1 minute and 1 hour, such as between 10 minutes and 30 minutes, such as 20 minutes.

The scanner can scan incoming communications to the computer network directed to a plurality of communication clients.

The plurality of communication clients can comprise one or more email and/or other messaging clients.

Identifying the suspicious adjunct to the incoming communication can comprise determining that the incoming communication originates from the suspicious destination.

Identifying the suspicious adjunct can comprise determining that the incoming communication originates from a destination which is present on a threat list, or absent from a safe list.

The scanning of the incoming communications can be performed for a predetermined scan duration from detection of the communication to the suspicious destination.

The predetermined scan duration can be between 1 minute and 1 hour, such as between 2 minutes and 10 minutes, such as 5 minutes. The computer-implemented method can further comprise determining the predetermined scan duration in dependence on one or more properties of the detected communication to the suspicious destination. Said one or more properties can comprise: an identity of the suspicious destination and/or any other destinations the communication is directed to, a type of the detected communication to the suspicious destination, and contents of the communication to the suspicious destination (including metadata and any adjuncts).

According to a fourth aspect, there is provided a computer program comprising instructions which, when the program is executed by an internet gateway, cause the internet gateway to carry out the method of he third aspect.

According to a fifth aspect, there is provided a computer-readable data carrier having stored thereon the computer program of the fourth aspect.

According to a sixth aspect, there is provided a data carrier signal carrying the computer program of the fourth aspect.

### BRIEF DESCRIPTION OF THE FIGURES

Aspects of the present disclosure will now be described by way of example with reference to the accompanying figures. In the figures:
Figure 1 schematically illustrates an example system;
Figure 2 schematically illustrates an example internet gateway;
Figure 3 is a flowchart of an example method;
Figure 4 is a flowchart of another example method; and
Figure 5 schematically illustrates an example data processing system.

### DETAILED DESCRIPTION

Proposed herein is a computer-implemented security method performed by an internet gateway connecting a computer network to the internet. The internet gateway monitors outgoing communications from the computer network in order to detect any communications to suspicious destinations. Detection of such an outgoing communication triggers subsequent scanning of incoming communications to the computer network, since the risk of receiving malicious communications is heightened following interaction with a malicious resource. When a suspicious adjunct to such an incoming communication is detected, it is opened in a sandbox container on the internet gateway.

This approach enables a suitable balance to be struck between security and consumption of resources such as memory, processing power, electrical power, and time. These benefits are achieved without requiring each and every network device to have its own sandboxing software installed and/or requiring each and every communication service to provide its own sandboxing functionality. It also avoids the security and privacy risks posed by permitting a third party to access the contents of communications and their adjuncts for analysis, allowing the administrator of a local computer network to maintain control over incoming communications.

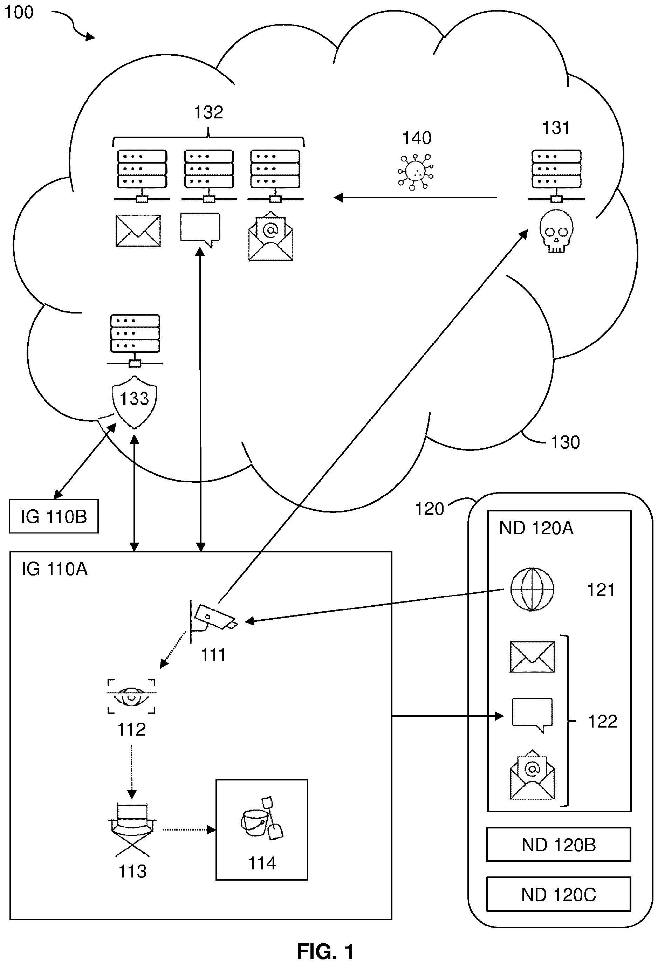

Figure 1 schematically illustrates an example system 100 in which the method proposed herein can be implemented. An internet gateway (IG) 110A, for example an internet service provider (ISP)'s managed router, connects a computer network 120 to the internet 130. The computer network 120 comprises one or more network devices (ND) 120A, 120B, 120C. It can for example be a local area network (LAN) which can comprise wired and/or wireless connections.

The internet gateway 110A comprises a traffic monitor 111 configured to monitor outgoing communications from the computer network 120, for example from a web client 121 of the network device 120A. The internet gateway 110A further comprises a scanner 112 configured to scan incoming communications (e.g. emails or messaging application messages) to the computer network 120, for example from one or more communication servers 132 to one or more communication clients (messaging applications/services) 122 of the network device 120A. The scanner 112 performs this scanning in response to detection, by the traffic monitor 111, of communication to a suspicious destination 131. The suspicious destination can for example be a uniform resource locator (URL), domain, or internet protocol (IP) address. The traffic monitor can for example use one or more web traffic protocols to detect the communication to the suspicious destination, e.g. one or more of: Hypertext Transfer Protocol (HTTP), HTTP Secure (HTTPS), Domain Name System (DNS), and Internet Protocol (IP). The internet gateway 110A further comprises a sandbox manager 113 configured to, in response to identification, by the scanner 112, of a suspicious adjunct to an incoming communication, launch a sandbox container 114 on the internet gateway 110A and open the suspicious adjunct in that sandbox container 114. The suspicious adjunct can for example be an attached file, or a link.

The suspicious adjunct is only passed on to its recipient communication client 122 if analysis of behaviour elicited by opening it in the sandbox container 114 indicates that it is benign. (Otherwise, it is blocked, and the intended recipient is optionally notified of this blocking.) Such analysis can be performed on the internet gateway 110A, or by a remote processor such as a security server 133, e.g. of an ISP, a cybersecurity service, or a resource reputation service. Performing the analysis locally on the internet gateway reduces the delay introduced before the suspicious adjunct or a notification that is has been blocked is delivered to the intended recipient and allows the administrator of the computer network 120 to maintain security and privacy of incoming communications and their adjuncts. On the other hand, offloading analysis to a remote service 133 saves resources on the internet gateway 110A, and may permit more extensive analysis to be performed if the remote service has access to more computing power, proprietary analysis tools such as machine learning models etc.

In this way, if a user of a network device 120A of the computer network 120 accesses a malicious resource 131, resulting in a malicious communication 140 being directed back to them, that malicious communication can be detected by the scanner 112 so that a malicious adjunct to it can be opened safely in a sandbox container 114, without risking infection/compromise of the network device 120A or the wider computer network 120.

The incoming communication can be held at the internet gateway 110A along with the suspicious adjunct. If the adjunct is determined to be benign then the incoming communication can be forwarded to its intended recipient client 122 together with the adjunct. If the adjunct is determined to be malign then the incoming communication can be blocked, or the incoming communication can be forwarded to the intended recipient client 122 after removal of the adjunct. In either case, an alert can optionally be provided to the intended recipient that receipt of a malign adjunct has been prevented.

Alternatively, the incoming communication can be forwarded to the intended recipient client 122 immediately without the suspicious adjunct (optionally with a notification that the communication has been stripped of the suspicious adjunct). The adjunct can then be forwarded to the recipient client 122 later if and when it is determined to be benign.

The internet gateway 110A can also communicate with a security server 133 (e.g. of an ISP, a cybersecurity service, or a resource reputation service) to share intelligence on the latest threats. For example, such communication can be to update a threat list and/or safe list which both the security server 133 and the internet gateway 110A maintain copies of. Alternatively or additionally, a copy of a suspicious adjunct (or an adjunct determined to be malicious) can be provided to the security server 133 for storage and/or (further) analysis. Similarly, a run trace generated by opening a suspicious adjunct in a sandbox container 114 can alternatively or additionally be provided to the security server 133 for storage and/or (further) analysis. The security server 133 can provide updates to the internet gateway 110A based on its analysis of data shared with it by the internet gateway 110A, and/or based on data shared with it by other internet gateways such as internet gateway 110B (which can operate in a similar manner to internet gateway 110A to connect another computer network, not shown, to the internet 130), and/or obtained from other sources.

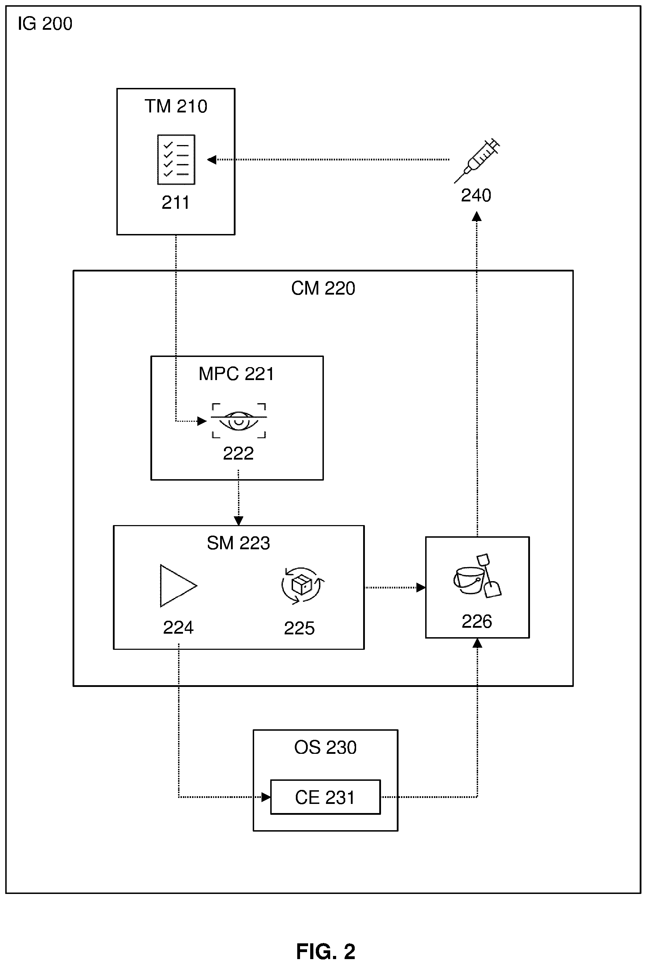

Figure 2 schematically illustrates an example internet gateway 200 which can be used to perform the methods described herein. (The internet gateway 200 of Figure 2 can correspond to the internet gateway 110A of Figure 1.)

The internet gateway 200 comprises a traffic monitor (TM) 210 (which can correspond to the traffic monitor 111 of Figure 1), which in turn comprises a threat list 211. The traffic monitor 210 determines that a destination of an outgoing communication from a computer network connected to the internet gateway 200 is suspicious if it is present on the threat list 211. Alternatively or additionally, the traffic monitor 210 can comprise a safe list (e.g. of approved and/or frequently visited locations), and the destination can be determined to be suspicious if it is absent from the safe list. Such a threat list/safe list can be stored on the internet gateway 200 (e.g. comprised in the traffic monitor 210 as shown), or at a remote location in communication with it, such as on a server for example of an ISP, a cybersecurity service, or a resource reputation service, e.g. the security server 133 of Figure 1. Alternatively or additionally, the internet gateway 200 can comprise an anomaly engine (e.g. comprised in the traffic monitor 210) configured to identify as suspicious destinations which are anomalous in the context of observed traffic behaviour for the computer network, and/or a particular network device on the computer network, and/or a particular user of the computer network.

Further comprised in the internet gateway 200 is a container manager (CM) 220 comprising a messaging proxy container (MPC) 221 (e.g. an email proxy container), a sandbox manager 223 (which can correspond to the sandbox manager 113 of Figure 1), and (when needed) one or more sandbox containers 226 (which can correspond to the sandbox container 114 of Figure 1).

The messaging proxy container 221 can act as a forward-only communication proxy between the communication clients present on the network (such as the communication clients 122 of Figure 1) and the communication services users of the network are subscribed to (such as those hosted by the communication servers 132 of Figure 1). However it can be configured to delay forwarding a message with an adjunct identified as suspicious until that adjunct is established to be benign (or to not ever forward the message, or to forward the message stripped of its adjunct, if the adjunct is determined to be malign). To maximise security benefits, all communications to all communication clients on the computer network served by the internet gateway 200 should be handled by the messaging proxy container 221. In some implementations, user permission for the messaging proxy container 221 to access the content of incoming messages may need to be obtained.

The messaging proxy container 221 comprises a scanner 222 (which can correspond to the scanner 112 of Figure 1) which is triggered by detection of communication to a suspicious destination by the traffic monitor 210. The scanner 222 is configured to scan the incoming communications for a predetermined scan duration from detection of the communication to the suspicious destination. The predetermined scan duration can for example be between 1 minute and 1 hour, such as between 2 minutes and 10 minutes, such as 5 minutes. The predetermined scan duration can be the same for all scans, or can be determined in dependence on one or more properties of the detected communication to the suspicious destination. Said one or more properties can for example comprise: the identity of the suspicious destination and/or any other destinations the communication is directed to, the type of the detected communication to the suspicious destination, and the contents of the communication to the suspicious destination (including metadata and any adjuncts).

The scanner 222 is configured to identify a suspicious adjunct to the incoming communication by determining that the incoming communication originates from the suspicious destination, or by determining that the incoming communication originates from a destination which is present on a threat list, or absent from a safe list. It can for example make use of email protocols such as Simple Mail Transfer Protocol (SMTP), Post Office Protocol (POP), and Internet Message Access Protocol (IMAP).

When the scanner 222 detects a suspicious adjunct to an incoming communication, it in turn triggers a sandbox manager (SM) 223. The sandbox manager 223 comprises an activator 224 configured to launch a sandbox container 226, for example by calling a container engine (CE) 231 to launch the sandbox container 226. Such a container engine 231 can be comprised in the internet gateway 200, for example as part of its operating system (OS) 230. The activator 224 is further configured to open the suspicious adjunct in the sandbox container 226.

The sandbox container 226 is configured to observe the runtime behaviour of the suspicious adjunct by logging a run trace of it. The internet gateway further comprises a remediator 240 configured to use said run trace to update one or more of: the traffic monitor 210, the scanner 222, one or more of the network devices connected to the internet gateway 200 (e.g. the network devices 120A, 120B, and 120C of Figure 1), and a security function of an ISP, a cybersecurity service, or a resource reputation service (e.g. hosted by the security server 133 of Figure 1). The update can comprise updating one or more of: a threat list (e.g. threat list 211), a safe list, and a data store (such as a database) comprising one or more of: malware samples, malware characteristics, malware signatures, and malware run traces. Local updates (i.e. to the internet gateway or network devices it provides with connectivity) can be performed relatively quickly, while remote updates enable intelligence sharing between multiple internet gateways.

The sandbox container 226 can be configured to mimic an operating system environment of a device of the computer network the incoming communication is directed to (such as the network device 120A of Figure 1). This increases the likelihood of the actions triggered by opening of a malicious adjunct completing without any detection that it has been sandboxed, increasing the quantity of intelligence which can be gathered. The sandbox container 226 can be configured to specifically mimic operating systems of each individual device of the computer network (such as the network device 120A of Figure 1), or to generically mimic the operating systems of one or more groups of devices of the computer network (such as all of the network devices 120A, 120B, and 120C of Figure 1). The former approach is more likely to fool the malware/threat actor, while the latter reduces the resource burden required to effect the mimicry.

The sandbox manager 223 comprises a container lifecycle manager 225 configured to destroy the sandbox container 226 in response to determining that a sequence of events initiated by opening the suspicious adjunct is complete, or, if sooner, on determining that a predetermined sandbox timeout period has expired. Determining that the sequence of events initiated by opening the suspicious adjunct is complete can comprise monitoring system calls (e.g. one or more of: file, network, memory, and processor related system calls) that the suspicious adjunct makes inside the sandbox container 226. The sequence of events can for example be determined to be complete when a frequency of such systems calls falls below a predetermined threshold frequency, such as between 10 and 100 system calls per second, e.g. 50 system calls per second. The predetermined sandbox timeout period can for example be between 1 minute and 1 hour, such as between 10 minutes and 30 minutes, such as 20 minutes.

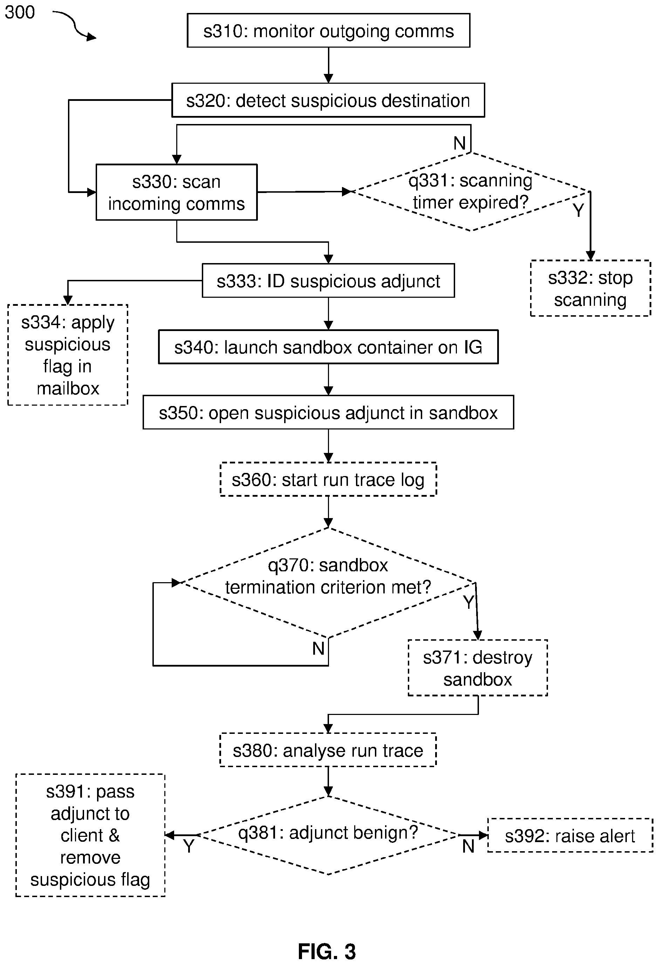

Figure 3 is a flowchart of an example method 300 performed by an internet gateway (such as the internet gateway 110A of Figure 1 or 200 of Figure 2) connecting a computer network (such as the computer network 120 of Figure 1) to the internet (shown at 130 in Figure 1).

At step s310 a traffic monitor (such as the traffic monitor 111 of Figure 1 or 210 of Figure 2) monitors outgoing communications from the computer network. This results in detection of communication to a suspicious destination (such as the malicious destination 131 of Figure 1) at step s320. In response thereto, a scanner (such as the scanner 112 of Figure 1 or 222 of Figure 2) scans incoming communications to the computer network at step s330. The scanner thereby identifies a suspicious adjunct to an incoming communication at step s333. In response thereto, a sandbox manager (such as the sandbox manager 113 of Figure 1 or 223 of Figure 2) launches a sandbox container (such as the sandbox container 114 of Figure 1 or 226 of Figure 2) on the internet gateway at step s340. The sandbox manager then opens the suspicious adjunct in that sandbox container at step s350.

In response to step s333, at step s334 the internet gateway can optionally label the incoming communication as suspicious in a mailbox of the communication service it has been received through. In this way, the intended recipient will be alerted to the possible danger if they access their mailbox via a different internet gateway.

In response to opening of the suspicious adjunct in the sandbox container at step s350, the sandbox container can optionally start to log a run trace of the suspicious adjunct at step s360.

Following opening of the suspicious adjunct in the sandbox container at step s350, the sandbox manager can optionally destroy the sandbox container at step s371 in response to determining at query q370 that a sequence of events initiated by opening the suspicious adjunct is complete, or, if sooner, that a predetermined sandbox timeout period has expired. This frees up memory, processing resources, and a container slot for other purposes. The run trace can then be analysed at optional step s380. If the suspicious adjunct is determined to be benign at the subsequent optional query q381 then it can be passed to its intended recipient communication client (e.g. one of the communication clients 122 of Figure 1) at optional step s391. If optional step s334 was implemented, then optional step s391 can further comprise removing the suspicious flag. If the adjunct is determined not to be benign at query q381, then an alert can be raised at optional step s392.

Scanning of the incoming communications at step s330 can optionally be performed for a predetermined scan duration from detection of the communication to the suspicious destination. Accordingly, step s330 flows into optional query q331 which tests whether that scanning timer has expired, and loops back to step s330 to continue scanning if not. If the scanning timer has expired, then scanning is stopped at optional step s332.

The monitoring of step s310 can be performed continuously, on an ongoing basis. Each time a suspicious destination is detected at step s320 the scanning timer can be (re)set, so that scanning can take place continuously for a longer period than the scanning timer duration if a second instance of communication to a or the suspicious destination is detected before the scanning timer triggered by the first such instance has expired.

If the internet gateway is capable of hosting multiple sandbox containers simultaneously then steps s340 onwards can be performed each time a suspicious adjunct is identified at step s333.

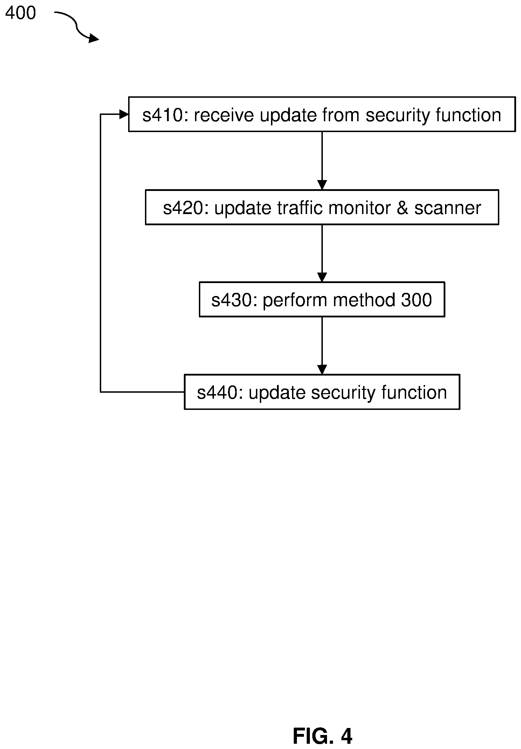

Figure 4 is a flowchart of an example method 400 for keeping the internet gateway which performs the method 300 (e.g. the internet gateway 110A of Figure 1 or 200 of Figure 2) up to date. At step s410, an update is received from a security function of an ISP, a cybersecurity service, or a resource reputation service, such as from the security server 133 of Figure 1. In response thereto, at step s420 a remediator of the internet gateway (such as the remediator 240 of Figure 2) updates the traffic monitor and the scanner. The method 300 of Figure 3 is then performed at step s430. Intelligence gathered by the internet gateway through that method is then provided to the security function by the remediator as an update at step s440. (In some implementations, this step is only performed if the adjunct is determined not to be benign at query q381 of method 300 of Figure 3.) The security function can then use this update to provide a further update to the internet gateway at step s410, such that updates are shared between the security function and the internet gateway in an ongoing feedback loop. The security function may share updates with a plurality of internet gateways in this way, so that all of them can benefit from intelligence gathered by each of them. The security function may also make use of data from other sources in the updates it provides to internet gateways.

Instead of waiting for the security function to provide an update based on the internet gateway's own update to it, the remediator can update the traffic monitor and scanner in response to step s430. Any functionally identical update received from the security function on subsequent performances of step s410 can then be ignored (though updates based on intelligence gathered by other internet gateways, from other sources, or based on further analysis of the internet gateway's update to the security function can still be effected).

The updates shared between the internet gateway and the security service can for example comprise one or more of: a run trace logged during running of the suspicious adjunct in the sandbox container, analysis performed thereon, and the suspicious adjunct itself. The updates performed in response to that sharing can for example comprise updating one or more of: a threat list; a safe list; and a data store (such as a database) comprising one or more of: malware samples, malware characteristics, malware signatures, and malware run traces.

### Suitable data processing system

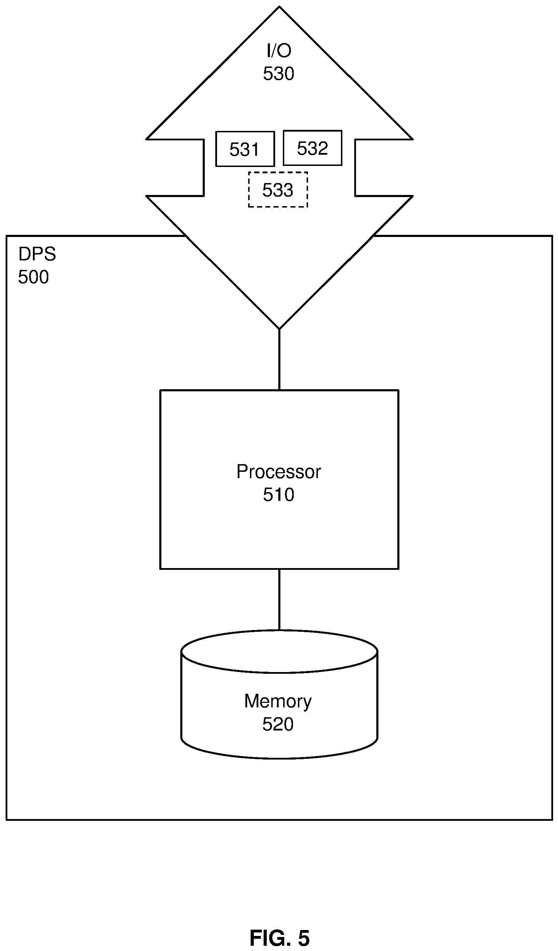

Figure 5 schematically illustrates an example data processing system (DPS) 500 capable of performing any of the methods described above. It comprises a processor 510 operably coupled to both a memory 520 and an interface (I/O) 530. The interface 530 comprises a receiver 531 and a transmitter 532.

The receiver 531 is configured to receive messages. It can comprise one or more wireless receiver modules and/or one or more wired receiver modules. The transmitter 532 is configured to transmit messages. It comprises one or more wireless transmitter modules and/or one or more wired transmitter modules.

The memory 520 can optionally comprise computer program instructions which, when the program is executed by the processor 510, cause the data processing system 500 to carry out any of the methods described above, such as the methods 300 of Figure 3 and 400 of Figure 4. Alternatively or additionally, the interface 530 can comprise a physical interface 533 configured to receive a data carrier having such instructions stored thereon. Alternatively or additionally, the receiver 531 can be configured to receive a data carrier signal carrying such instructions.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. An internet gateway for connecting a computer network to the internet, the internet gateway comprising:
a traffic monitor configured to monitor outgoing communications from the computer network;
a scanner configured to scan incoming communications to the computer network in response to detection, by the traffic monitor, of communication to a suspicious destination; and
a sandbox manager configured to, in response to identification, by the scanner, of a suspicious adjunct to an incoming communication, launch a sandbox container on the internet gateway and open the suspicious adjunct in that sandbox container.

2. The internet gateway of claim 1, wherein the sandbox container is configured to log a run trace of the suspicious adjunct and the internet gateway further comprises a remediator configured to use said run trace to update one or more of:
the traffic monitor,
the scanner,
one or more network devices comprised in the computer network, and
a security function of an internet service provider, a cybersecurity service, or a resource reputation service.

3. The internet gateway of claim 2,
wherein the remediator is configured to use the run trace to update a security function of an internet service provider, a cybersecurity service, or a resource reputation service;
the internet gateway being further configured to update one or both of the traffic monitor and the scanner based on an update provided to it by the security function.

4. A system comprising a plurality of internet gateways according to claim 3, and the security function referred to therein.

5. The internet gateway of any of claims 1 to 3, wherein the sandbox container is configured to mimic an operating system environment of a device of the computer network the incoming communication is directed to.

6. The internet gateway of any of claims 1 to 3, or 5, wherein the scanner is configured to scan incoming communications to the computer network directed to a plurality of communication clients.

7. A computer-implemented security method performed by an internet gateway connecting a computer network to the internet, the method comprising:
a traffic monitor monitoring outgoing communications from the computer network;
the traffic monitor thereby detecting communication to a suspicious destination;
responsive thereto, a scanner scanning incoming communications to the computer network;
the scanner thereby identifying a suspicious adjunct to an incoming communication;
responsive thereto, a sandbox manager launching a sandbox container on the internet gateway; and
the sandbox manager opening the suspicious adjunct in that sandbox container.

8. The computer-implemented method of claim 7, further comprising the sandbox container logging a run trace of the suspicious adjunct and a remediator of the internet gateway using said run trace to update one or more of:
the traffic monitor,
the scanner,
one or more network devices comprised in the computer network, and
a security function of an internet service provider, a cybersecurity service, or a resource reputation service.

9. The computer-implemented method of claim 8,
wherein the remediator uses the run trace to update a security function of an internet service provider, a cybersecurity service, or a resource reputation service,
the method further comprising updating one or both of the traffic monitor and the scanner based on an update provided by the security function.

10. The computer-implemented method of claim 9, wherein the update provided by the security function is based on one or more of: the update provided by the remediator of the internet gateway, an update provided by another internet gateway, and another data source.

11. The computer-implemented method of any of claims 8 to 10, wherein identifying the suspicious adjunct to the incoming communication comprises determining that the incoming communication originates from the suspicious destination.

12. The computer-implemented method of any of claims 8 to 11, wherein the scanning of the incoming communications is performed for a predetermined scan duration from detection of the communication to the suspicious destination.

13. A computer program comprising instructions which, when the program is executed by an internet gateway, cause the internet gateway to carry out the method of any of claims 8 to 12.

14. A computer-readable data carrier having stored thereon the computer program of claim 13.

15. A data carrier signal carrying the computer program of claim 13.
